# EUROPÄISCHE PATENTSCHRIFT

(11) **EP 2 332 870 B1**
(45) Veröffentlichungstag und Bekanntmachung des Hinweises auf die Patenterteilung: **09.05.2012**
(21) Anmeldenummer: 10194427.0
(22) Anmeldetag: 09.12.2010
(51) Int. Cl.: B65G 69/32

(54) **Torabdichtung**
Door seal
Etanchéification de portail

(30) Priorität: 14.12.2009 DE 102009044878; 02.01.2010 DE 102010003965
(43) Veröffentlichungstag der Anmeldung: 15.06.2011
(73) Patentinhaber: Gebr. Koch GmbH + Co. KG, 32791 Lage/Lippe (DE)
(72) Erfinder: Diepolder, Richard, 32971, Lage (DE)
(74) Vertreter: Habbel, Ludwig

(56) Entgegenhaltungen:
- EP-A1- 0 477 655
- DE-U1- 29 715 641

## Beschreibung

Die Erfindung bezieht sich auf eine Torabdichtung gemäß dem Oberbegriff des Hauptanspruches, wie sie aus der DE 297 15 641 U bekannt ist.

In der gattungsbildenden DE 31 30 657 C2 wird eine verformbare Dichtung des Spaltes zwischen einer Gebäudeöffnung und einem an diese herangefahrenes Fahrzeug beschrieben und die eigentliche Torabdichtung besteht aus einer abriebfesten Folie, die gebäudeseitig an dem Gebäude befestigt ist und frontseitig über Metallprofile stabilisiert ist. Zusätzlich sind auf jeder Seite zwei Lenker vorgesehen, die an der Gebäudeseite in oder an einer aufwendigen Haltekonstruktion befestigt sind und von hier aus ansteigend nach oben zum frontseitigen Ende der seitlichen Rahmenteile führen. Wenn auf die Rahmenteile Querkräfte durch anfahrende Lastwagen oder z. B. durch Windeinfluss einwirken, werden diese in die Wand geleitet. Daher ist eine wandseitige seitensteife Befestigung der Rahmenteile im Stand der Technik von großer Bedeutung, um die Rahmenteile auch dann ordnungsgemäß zu halten.

Der Einsatz der beiden Lenker auf jeder Seite und die seitensteife wandseitige Befestigung verteuert die Abdichtung erheblich.

Bei der Einrichtung gemäß der DE 196 06 219 C1 wird die Gesamtabdichtung noch mehr verteuert, da auf jeder Seite der seitlichen Rahmenteile gelenkig ausgebildete Hebel vorgesehen sind, die über eine Zugfederanordnung unter Spannung gehalten werden und auch hier ist es erforderlich, für die Absorption und korrekte Befestigung der Rahmenteile zu sorgen, um die auftretenden Querkräfte aufzunehmen.

Bei der Einrichtung gemäß der EP 0 602 501 B1 wird für die seitlichen Rahmenteile auf eine Lenkerführung verzichtet und dafür werden die seitlichen Rahmenteile an nachgiebigen, biegsamen, an ihren oberen Enden angreifende Halterungen aufgehängt, wobei in diese Halterung noch Federn eingeschlossen werden. Die obere Abdichtung wird von Streben getragen, die von den Rahmenteilen unabhängig sind. Diese Anordnung hat sich in der Praxis überhaupt nicht bewährt und ist darüber hinaus ebenfalls sehr aufwendig.

Der Erfindung liegt die Aufgabe zugrunde, eine Torabdichtung vorzuschlagen, die wesentlich kostengünstiger als die bisher bekannten Torabdichtungen herstellbar und einsetzbar ist, wobei insbesondere die Kosten für die sehr teuren metallischen Bauteile gesenkt werden sollen.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, dass das gebäudeseitige Ende der beiden seitlichen Rahmenteile unmittelbar an das Gebäude angeschlossen werden kann oder lediglich ein dünnes Anschlussprofil aufweist, das an die eigentliche Gebäudewand angeschlossen werden kann. Dieses dünne Anschlussprofil ist nicht vorgesehen, um Querkräfte aufzunehmen, sondern hat die Aufgabe, eine montagefreundliche Torabdichtung zu schaffen, da die Befestigung dieses dünnen Anschluss-profiles, welches das gebäudeseitige Ende der Bespannung der Rahmenteile trägt, problemlos an die Gebäudewand angeschlossen werden kann.

Weiterhin ist auf jeder Seite im oberen Bereich der Rahmenteile nur ein Lenker vorgesehen, der von dem gebäudeseitigen Ende des Rahmenteiles ansteigend zum frontseitigen Ende des vorderen Rahmenteiles führt und hier an ein Anschlussprofil oder an die Querleiste anschließt. Dieses frontseitige Anschlussprofil, das im wesentlichen über die ganze Höhe des seitlichen Rahmenteiles verläuft, ist unstarr mit einer oberen Querleiste verbunden, so dass dieses Anschlussprofil bei Berührung mit dem Heckteil des anfahrenden Fahrzeuges ohne Zerstörung nach hinten und im unteren Bereich zur Seite ausweichen kann. Der Begriff "unstarr" bedeutet, dass das frontseitige Ende des Rahmenteiles an die obere Querleiste anschließt und dabei um eine horizontale Achse schwenken kann, die quer zur Längsachse der Querleiste verläuft.

Der untere Bereich des seitlichen Rahmenteiles weist eine Spreizvorrichtung auf, die zwischen der Gebäudewand und dem frontseitigen Anschlussprofil wirkt und dafür Sorge trägt, dass im Ruhezustand das seitliche Rahmenteil gespannt, aber nachgiebig in seiner Ruheposition gehalten wird und bei Wind bzw. Fahrzeugeinwirkung nach hinten und zur Seite ausweichen kann.

Die obere Querleiste kann mit dem frontseitigen Anschlussprofil über eine Zugfeder verbunden sein, d. h. auf jeder Seite der Torabdichtung ist eine solche Zugfeder zwischen Anschlussprofil und Querleiste vorgesehen, um das Rahmenteil gegen das nach außen wirkende Gewicht der Schürzen senkrecht zu halten. Um eine gute Halterung zwischen oberer Querleiste und Anschlussprofil zu erreichen, ist die vorstehend erläuterte Zugfeder in ihrer Vorspannung einstellbar und vorzugsweise wird eine Wendelfeder eingesetzt.

Vorzugsweise greift gemäß der Erfindung jeder Lenker frontseitig z. B. an das Anschlussprofil an, so dass hier eine gute Halterung erreicht wird.

Die obere Querleiste ist vorzugsweise als Hohlprofil ausgebildet und nimmt an jeder Seite, an jeder Endseite also, ein Einsteckteil auf, das mit dem zugehörigen Anschlussprofil verbunden ist, d. h., dass das Anschlussprofil unten nach außen ausweichen kann.

Um eine Vorstellung für die Größe der zum Einsatz kommenden Metallprofile zu bekommen, sei darauf hingewiesen, dass beispielsweise das gebäudeseitige Anschlussprofil aus einem Leichtmetall besteht und eine Größe von 20 x 20 x 2 mm aufweisen kann.

Das frontseitige Anschlussprofil besteht ebenfalls aus einem Leichtmetall und weist eine Größe von z. B. 40 x 40 x 4 mm auf, während die obere Querleiste als Kastenprofil ausgebildet ist, aus einem Leichtmetall besteht und eine Größe von z. B. 40x 40 x 2 mm besitzt.

Es sei ausdrücklich darauf hingewiesen, dass die Erfindung keineswegs auf die angegebenen Maße beschränkt ist, sondern diese Maßangaben sollen nur das Vorstellungsvermögen über den Aufbau der erfindungsgemäßen Einrichtung erleichtern. So sei darauf hingewiesen, dass auch die Bespannung der Rahmenteile, die obere Abdichtung und die an den Rahmenteilen und der Abdichtung angeordneten Schürzen z. B. aus einer Gewebefolie oder einer dicken Kunststofffolie besteht, die entsprechend abriebfest ausgebildet ist.

Ein Ausführungsbeispiel der Erfindung, auf das diese aber keineswegs begrenzt ist, wird nachfolgend anhand der Zeichnungen erläutert. Die Zeichnungen zeigen dabei in
- Fig. 1: schaubildlich eine Torabdichtung mit zuge- höriger Gebäudewand, in
- Fig. 2: in größerem Maßstab eine Innenansicht auf ein Rahmenteil gemäß einer ersten Ausfüh- rungsform, in den
- Fig. 3 und 4: abgeänderte Ausführungsformen, in
- Fig. 5: in wiederum größerem Maßstab eine Innen- ansicht auf die Eckverbindung zwischen oberer Querleiste und Rahmenteil sowie in den
- Fig. 6, 7 und 8: Verbindungen zwischen oberer Querleiste und Rahmenteil.

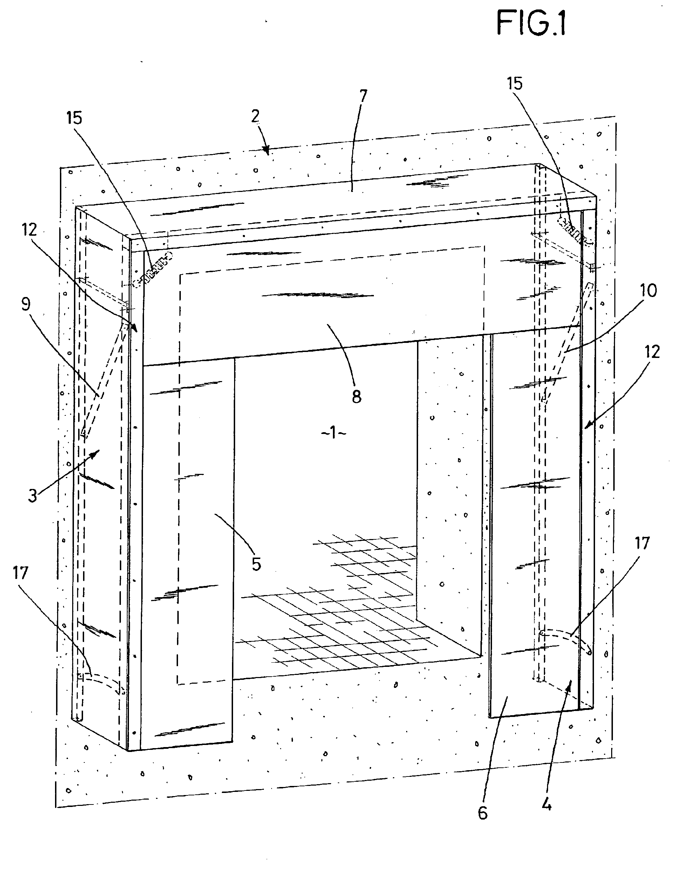

In Fig. 1 ist eine Öffnung 1 in einem Gebäude bezeichnet, von welchem eine Wandung 2 erkennbar ist. Beiderseits der Gebäudeöffnung 1 ist im Abstand von dieser die eigentliche Torabdichtung vorgesehen, die im Wesentlichen aus zwei Rahmenteilen 3 und 4 mit entsprechender Bespannung besteht, die seitliche Schürzen 5 und 6 tragen. Weiterhin ist eine obere Abdichtung 7 erkennbar, die eine obere Schürze 8 trägt. Die Schürzen 5, 6 und 8 reichen so weit in den lichten Raum, der durch die Gebäudeöffnung 1 definiert wird, hinein, dass bei einem Anfahren eines Fahrzeuges sich diese Schürzen 5, 6 und 8 abdichtend um und auf den Fahrzeugaufbau legen und damit die Gebäudeöffnung 1 gegenüber der Außenatmosphäre im wesentlichen abdichten.

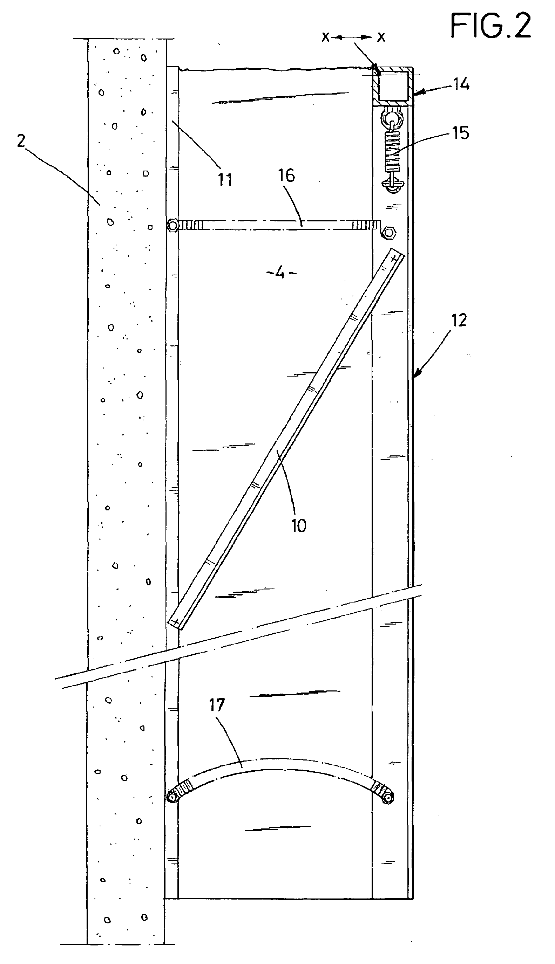

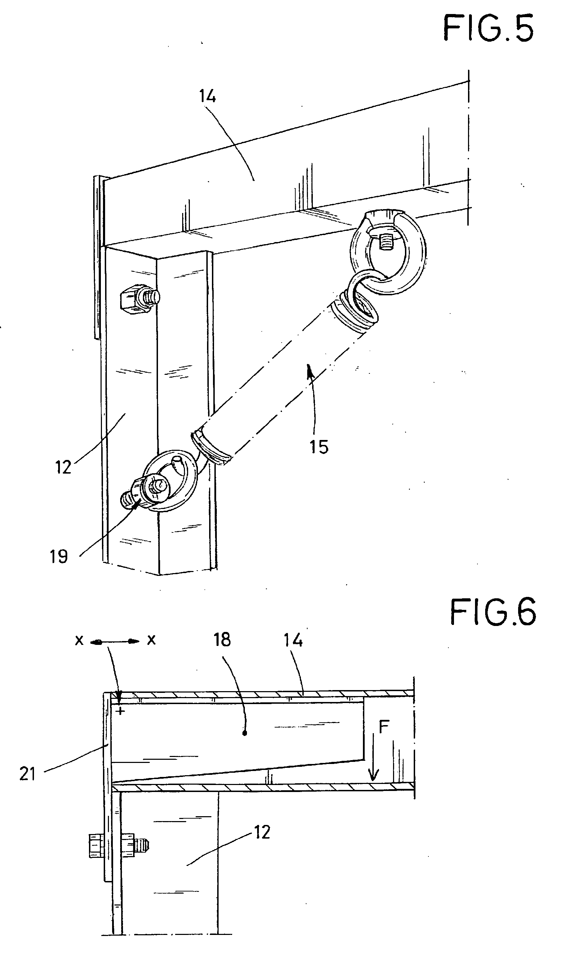

Fig. 2 zeigt die Innenansicht des Rahmenteiles 4 und es ist erkennbar, dass an der eigentlichen Gebäudewand 2 ein Anschlussprofil 11 befestigt ist, das das gebäudeseitige Ende der Bespannung des Rahmenteiles 4 trägt, wobei das frontseitige Ende dieser Bespannung an ein Anschlussprofil 12 anschließt, das vom oberen bis zum unteren Ende des Rahmenteiles 4 reicht und an seinem oberen Ende über eine Querleiste 14 mit dem Rahmenteil 3 verbunden ist, wobei die Verbindung zwischen dem Anschlussprofil 12 und der Querleiste 14 insbesondere nachfolgend beispielhaft noch anhand der Fig. 5 bis 8 zu erläutern ist.

Beispielsweise ist zwischen der oberen Querleiste 14 und dem Anschlussprofil 12 eine Zugfeder 15 vorgesehen, die die Verbindung zwischen den beiden Bauteilen stabilisiert. Vorteilhaft ist hierbei, dass die Zugfeder 15 in ihrer Vorspannung einstellbar ist, so dass dadurch auch die Verbindung zwischen der oberen Querleiste 14 und dem Anschlussprofil den jeweiligen Umständen entsprechend stabilisiert wird.

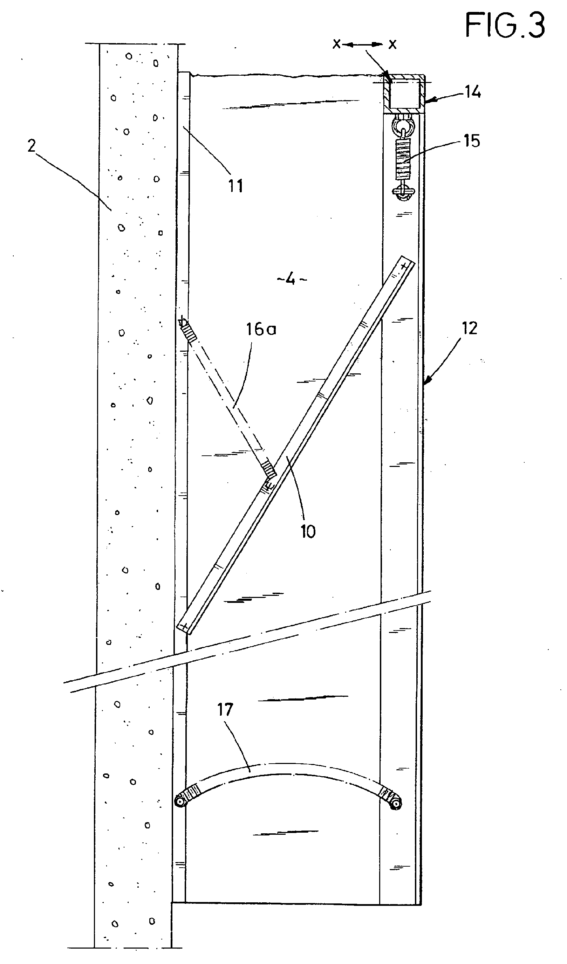

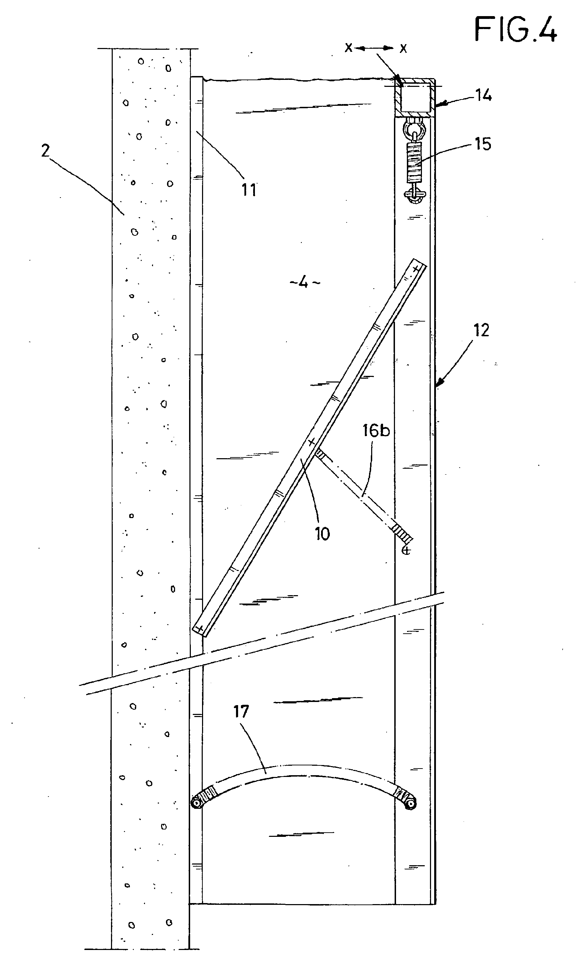

Von dem bereits erläuterten Anschlussprofil 11 aus führt ein Lenker 10 zum Anschlussprofil 12, wobei in Fig. 1 die entsprechenden Lenker 9 und 10 und die Anschlussprofile 11 teilweise strichpunktiert dargestellt sind. Die Lenker 9 und 10 sind an den Anschlussprofilen 11 und 12 relativ beweglich gelagert. Das Anschlussprofil 11 oder die Lenker 9 und 10 gemäß Fig. 2, 3 und 4 können mit einer Spreizvorrichtung 16, 16a oder 16b verbunden sein, die von der Gebäudeseite zum Anschlussprofil 12 oder zum Lenker 9 bzw. 10 oder vom Lenker 9 bzw. 10 zum Anschlussprofil 12 führen. Die Spreizvorrichtungen 16, 16a und 16b können z. B. als Feder, Schaumstoffblock, Gummiblock oder als Gasdruckfeder ausgebildet sein. Wichtig ist die bewegliche Befestigung des Anschluss-profiles 12 an der Querleiste 14, d. h., das Anschlussprofil 12 kann gegenüber der oberen Querleiste 14 um die horizontale Achse X-X schwenken, wobei die horizontale Achse X-X in Fig. 2 und Fig. 6 eingezeichnet ist. Durch diese Anordnung kann bei Wind bzw. bei einer Fahrzeugeinwirkung das Anschlussprofil 12 insbesondere unten nach außen, d. h. zur Seite ausweichen.

In Fig. 2 ist erkennbar, dass im unteren Bereich des Rahmenteiles 4 - und das Gleiche gilt auch für das Rahmenteil 3 - eine Spreizvorrichtung 17 vorgesehen ist, die bei dem dargestellten Ausführungsbeispiel als gebogene Zugfeder ausgebildet sein kann, aber auch aus Schaumstoff oder Gummi bestehen kann. Auch eine Druckfeder kann eingesetzt werden.

In Fig. 5 ist beispielhaft im größeren Maßstab der Eckbereich zwischen dem Anschlussprofil 12 und der oberen Querleiste 14 dargestellt, wobei selbstverständlich dies für beide Seiten gilt, wie dies insbesondere aus Fig. 1 ersichtlich ist, in der die beiden Zugfedern 15 strichpunktiert eingezeichnet sind.

Es ist erkennbar, dass die Zugfeder 15 am Anschlussprofil 12 an einer Stellschraube 19 angreift, durch deren Betätigung die Zugfeder 15 in ihrer Vorspannung eingestellt werden kann.

Am oberen Ende des Anschlussprofils 12 ist ein Einsteckteil 18, 18a oder 18b angeordnet. Ein Flansch 21 trägt das in die obere Querleiste 14 ragende Einsteckteil 18, das bei dem dargestellten Ausführungsbeispiel gemäß Fig. 6 sich verjüngend dargestellt ist, so dass Kippbewegungen in Richtung des Pfeiles F möglich sind und dass dadurch das Anschlussprofil 12 tragende Rahmenteil unten nach außen wegschwenken kann, wenn ein LKW so weit seitlich gegen die Abdichtung vor dieses fährt und dieses beaufschlagt.

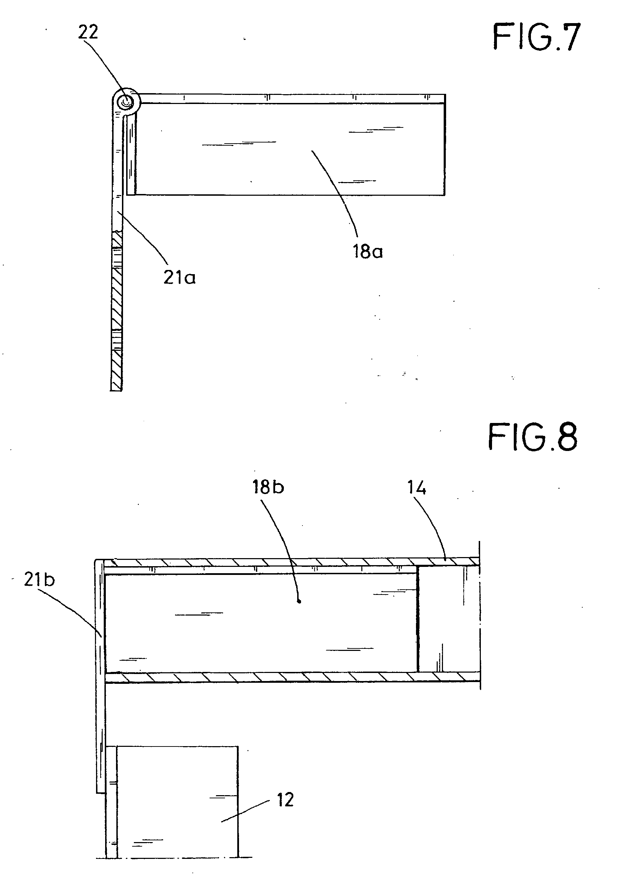

In den Fig. 7 und 8 sind abgeänderte mögliche Ausführungsformen der Verbindung zwischen dem Anschlussprofil 12 und der Querleiste 14 dargestellt. In Fig. 7 ist hierzu ein Flansch 21 a vorgesehen, der über eine Gelenkachse 22 an das Einsteckteil 18a anschließt. In Fig. 8 ist der Flansch 21 b als Federplatte ausgebildet, die die entsprechende Beweglichkeit in die Verbindung der beiden Bauteile 12 und 18b einträgt.

Durch diese Anordnung ist es möglich, dass das Anschlussprofil 12 an die obere Querleiste 14 um eine horizontale Achse X-X schwenkt. Diese horizontale Achse X-X verläuft quer zur Längsachse der Querleiste 14.

Die erfindungsgemäße Anordnung ermöglicht also die Aufnahme von Kräften, ohne dass diese über den Einsatz von schweren Profilen, Lenkern, Scherenanordnungen od. dgl. in die Gebäudewand eingeleitet werden müssen, sondern gemäß der Erfindung können die Rahmenteile ausweichen, und diese Grundidee der ausweichenden Rahmenteile ermöglicht eine weniger kostenaufwendige Konstruktion der gesamten Abdichtung.

## Patentansprüche

1. Torabdichtung zwischen dem Rand einer Öffnung (1) eines Gebäudes (2) und dem Heck eines an diese Gebäudeöffnung (1) herangefahrenen Fahrzeugs mit nachgiebigen seitlichen Rahmenteilen (3, 4) mit seitlichen Schürzen (5, 6) und einer nachgiebigen horizontalen oberen Abdichtung (7) sowie einer an dieser angeordneten, im Ruhezustand nach unten herabhängenden oberen Schürze (8) sowie das frontseitige Ende der Rahmenteile (3, 4) mit der Gebäudewand (2) verbindende Lenker,
**dadurch gekennzeichnet,**
**dass** je seitlichem Rahmenteil (3, 4) nur ein Lenker (9, 10) im oberen Bereich vorgesehen ist,
**dass** das frontseitige Ende des Rahmenteiles (3, 4) ein Anschlussprofil (12) trägt, welches unstarr an eine obere Querleiste (14) anschließt und dabei gegenüber der Querleiste (14) zur Seite hin beweglich ist.

2. Torabdichtung nach Anspruch 1,
**dadurch gekennzeichnet,**
**dass** das gebäudeseitige Ende des Rahmenteiles (3,4) ein dünnes Anschlussprofil (11) trägt.

3. Torabdichtung nach Anspruch 1 oder 2,
**dadurch gekennzeichnet,**
**dass** die obere Querleiste (14) mit dem frontseitigen Anschlussprofil (12) über eine Zugfeder (15) verbunden ist.

4. Torabdichtung nach einem oder mehreren der vorhergehenden Ansprüche,
**gekennzeichnet durch**
ein an das Gebäude (2) oder an das gebäudeseitige Anschlussprofil (11) und das frontseitige Anschlussprofil (12) und/oder den Lenker (9, 10) und/oder an den Lenker (9, 10) und das frontseitige Anschlussprofil (12) anschließendes Spreizmittel (16, 16a oder 16b).

5. Torabdichtung nach einem oder mehreren der vorhergehenden Ansprüche,
**dadurch gekennzeichnet,**
**dass** im unteren Bereich das seitliche Rahmenteil (3, 4) durch eine federnde, zwischen dem gebäudeseitigen Anschlussprofil (11) und dem frontseitigen Anschlussprofil (12) angeordnete Spreizvorrichtung (17) gespannt ist.

6. Torabdichtung nach Anspruch 5,
**dadurch gekennzeichnet,**
**dass** die Spreizvorrichtung (17) und das Spreizmittel (16, 16a, 16b) als Wendelfeder, Blattfeder, Schaumstoffelement, Gummielement oder Gasdruckzylinder ausgebildet ist.

7. Torabdichtung nach Anspruch 3,
**dadurch gekennzeichnet,**
**dass** die Zugfeder (15) als Wendelfeder ausgebildet ist.

8. Torabdichtung nach Anspruch 3 und 7,
**dadurch gekennzeichnet,**
**dass** die Zugfeder (15) in ihrer Vorspannung einstellbar ist.

9. Torabdichtung nach einem oder mehreren der vorhergehenden Ansprüche,
**dadurch gekennzeichnet,**
**dass** jeder Lenker (9, 10) frontseitig an das Anschlussprofil (12) anschließt.

10. Torabdichtung nach einem oder mehreren der vorhergehenden Ansprüche,
**dadurch gekennzeichnet,**
**dass** jeder Lenker (9, 10) frontseitig an die Querleiste (14) anschließt.

11. Torabdichtung nach einem oder mehreren der vorhergehenden Ansprüche,
**dadurch gekennzeichnet,**
**dass** die obere Querleiste (14) als Hohlprofil ausgebildet ist und ein Einsteckteil (18) endseitig aufnimmt, das mit dem zugehörigen Anschlussprofil (12) verbunden ist.

12. Torabdichtung nach Anspruch 11,
**dadurch gekennzeichnet,**
**dass** das Einsteckteil (18) in der oberen Querleiste (14) nach unten um die gedachte Querachse (X-X) kippbar gelagert ist.

## Claims

1. Door seal between the edge of an opening (1) in a building (2) and the rear of a vehicle moved up against this opening (1), with yielding lateral frame parts (3, 4) with lateral aprons (5, 6) and a yielding horizontal upper seal (7), an upper apron (8) arranged on this which in the resting position hangs downwards, and the guide rod connecting the front-side end of the frame sections (3, 4) with the wall of the building,
**characterised in**
**that** only one guide rod (9, 10) is provided in the upper area for each of the lateral frame sections (3, 4) that the front-side end of the frame section (3, 4) supports a joining profile (12) which is joined non-rigidly to an upper transverse strip (14) and can be moved to the side with reference to the transverse strip (14).

2. Door seal according to claim 1 **characterised in**
**that** the end of the frame section (3, 4) on the building side supports a thin joining profile (11).

3. Door seal according to claim 1 or claim 2 **characterised in**
**that** the upper transverse strip (14) is connected to the front-side joining profile (12) via a tension spring (15).

4. Door seal according to one or several of the above claims, **characterised by** an expanding means (16, 16a or 16b) attached to the building (2) or to the joining profile (11) on the building side and the front-side joining profile (12) and/or the guide rod (9, 10) and/or to the guide rod (9, 10) and the front-side joining profile (12).

5. Door seal according to one or several of the above claims, **characterised in**
**that** the lateral frame section (3, 4) is tensioned in the lower area by a resilient expanding device (17) arranged between the joining profile (11) on the building side and the joining profile (12) on the front side.

6. Door seal according to claim 5, **characterised in**
**that** the expanding device (17) and the expanding means (16, 16a, 16b) are formed as a spiral spring, leaf spring, foam-material element, rubber element or pneumatic cylinder.

7. Door seal according to claim 3, **characterised in**
**that** the tension spring (15) is formed as a spiral spring.

8. Door seal according to claim 3 and claim 7, **characterised in**
**that** the pre-stressing of the tension spring (15) can be adjusted.

9. Door seal according to one or several of the above claims, **characterised in**
**that** each of the guide rods (9, 10) is joined at the front to the joining profile (12).

10. Door seal according to one or several of the above claims, **characterised in**
**that** each of the guide rods (9, 10) is joined at the front to the transverse strip (14).

11. Door seal according to one or several of the above claims, **characterised in**
**that** the upper transverse strip (14) is formed as a hollow profile and receives a push-in part (18) at its end, which push-in part is connected to the corresponding joining profile (12).

12. Door seal according to claim 11, **characterised in**
**that** the push-in part (18) is mounted in the upper transverse strip (14) to tilt downwards around the imaginary transverse axis (X-X).

## Revendications

1. Étanchéité de portail, réalisée entre le bord d'une baie (1) de bâtiment (2) et la partie arrière d'un véhicule ayant approché cette baie (1) de bâtiment, comprenant des pièces d'encadrement (3, 4) latérales compressibles à jupes latérales (5, 6) et une étanchéité (7) horizontale supérieure compressible ainsi qu'une jupe supérieure (8) pendant vers le bas au repos agencée contre ladite étanchéité, ainsi que des bras reliant l'extrémité frontale des pièces d'encadrement (3, 4) avec le mur (2) du bâtiment, **caractérisée en ce que**
dans la partie supérieure n'est prévu qu'un seul bras (9, 10) par pièce d'encadrement (3, 4) latérale, l'extrémité côté frontal de la pièce d'encadrement (3, 4) supporte un profilé de raccordement (12) prolongeant de façon non rigide un bandeau transversal (14) supérieur et déplaçable latéralement par rapport au bandeau transversal (14).

2. Étanchéité de portail selon la revendication 1, **caractérisée en ce que**
l'extrémité côté bâtiment de la pièce d'encadrement (3, 4) supporte un profilé de raccordement (11) mince.

3. Étanchéité de portail selon la revendication 1 ou 2, **caractérisée en ce que**
le bandeau transversal (14) supérieur est relié au profilé de raccordement (12) côté frontal via un ressort de traction (15).

4. Étanchéité de portail selon l'une ou plusieurs des revendications précédentes, **caractérisée**
**par** un moyen d'expansion (16, 16a ou 16b) se raccordant au bâtiment (2) ou au profilé de raccordement (11) côté bâtiment et au profilé de raccordement (12) côté frontal et/ou au bras (9, 10) et/ou au bras (9, 10) et au profilé de raccordement (12) côté frontal.

5. Étanchéité de portail selon l'une ou plusieurs des revendications précédentes, **caractérisée en ce que**
dans la zone inférieure la pièce d'encadrement latérale (3, 4) est tendue par un dispositif d'expansion (17) à amorti agencé entre le profilé de raccordement (11) côté bâtiment et le profilé de raccordement (12) côté frontal.

6. Étanchéité de portail selon la revendication 5, **caractérisée en ce que**
le dispositif d'expansion (17) et le moyen d'expansion (16, 16a, 16b) sont configurés sous forme de ressort hélicoïdal, ressort à lame, élément en matériau mousse, élément en caoutchouc ou vérin à gaz sous pression.

7. Étanchéité de portail selon la revendication 3, **caractérisée en ce que**
le ressort de traction (15) est configuré en ressort hélicoïdal.

8. Étanchéité de portail selon les revendications 3 et 7, **caractérisée en ce**
**que** la précontrainte du ressort de traction (15) est réglable.

9. Étanchéité de portail selon l'une ou plusieurs des revendications précédentes, **caractérisée en ce**
**que** chaque bras (9, 10) vient se raccorder côté frontal contre le profilé de raccordement (12).

10. Étanchéité de portail selon l'une ou plusieurs des revendications précédentes, **caractérisée en ce que**
chaque bras (9, 10) vient se raccorder côté frontal contre le bandeau transversal (14).

11. Étanchéité de portail selon l'une ou plusieurs des revendications précédentes, **caractérisée en ce que**
le bandeau transversal (14) supérieur est configuré en profilé creux et reçoit sur le côté terminal une pièce enfichée (18) reliée avec le profilé de raccordement (12) afférent.

12. Étanchéité de portail selon la revendication 11, **caractérisée en ce que**
la pièce enfichée (18) se trouve en appui dans le bandeau transversal supérieur (14), d'une façon lui permettant de pivoter autour de l'axe imaginaire (X-X).
